# EUROPÄISCHE PATENTSCHRIFT

(11) **EP 3 099 472 B1**
(45) Veröffentlichungstag und Bekanntmachung des Hinweises auf die Patenterteilung: **28.03.2018**
(21) Anmeldenummer: 15700172.8
(22) Anmeldetag: 07.01.2015
(51) Int. Cl.: B29C 70/52, B29L 23/00, B29L 22/00

(54) **VERFAHREN UND VORRICHTUNG ZUR HERSTELLUNG DÜNNWANDIGER KUNSTSTOFFPROFILE**
METHOD AND DEVICE FOR PRODUCING THIN-WALLED PLASTIC PROFILES
PROCÉDÉ ET DISPOSITIF DE FABRICATION DE PROFILÉS EN MATIÈRE PLASTIQUE À PAROI MINCE

(30) Priorität: 30.01.2014 DE 102014001082
(43) Veröffentlichungstag der Anmeldung: 07.12.2016
(73) Patentinhaber: Thomas GmbH + Co. Technik + Innovation KG, 27432 Bremervörde (DE)
(72) Erfinder: JANSEN, Klaus, 21614 Buxtehude (DE)
(74) Vertreter: Möller, Friedrich
(86) Internationale Anmeldenummer: PCT/EP2015/000014
(87) Internationale Veröffentlichungsnummer: WO 2015/113728

(56) Entgegenhaltungen:
- WO-A1-2008/116560
- CN-A- 101 284 422
- JP-A- H06 335 974
- JP-A- S59 224 335

## Beschreibung

Die Erfindung betrifft ein Verfahren zum Herstellen eines dünnwandigen Kunststoffprofils gemäß dem Oberbegriff des Anspruchs 1, sowie eine Vorrichtung zur Herstellung eines dünnwandigen Kunststoffprofils gemäß dem Oberbegriff des Anspruchs 10.

Kunststoffgegenstände, insbesondere Kunststoffprofile, aus Kunststoff und einer durchgehenden Verstärkung aus Fasern, Geweben und/oder Gewirken, die in den Kunststoff eingebettet sind, werden überwiegend in einem Strang hergestellt. Dieses geschieht üblicherweise im Pultrusionsverfahren. Dazu wird die Verstärkung durch eine Form hindurchgeführt und die Verstärkung in der Form in flüssigem Kunststoff eingebettet, der anschließend in der Form aushärtet.

Bei bekannten Verfahren und Vorrichtungen wird, wie beispielsweise in WO 2008/116560 A1 beschrieben, das die Form verlassende, ausgehärtete Kunststoffprofil durch eine in Pultrusionsrichtung vor der Form angeordnete Abzieheinrichtung durch die Form gezogen und dabei gleichzeitig abtransportiert. Dadurch, dass das Kunststoffprofil von der Abzieheinrichtung durch die Form gezogen wird, lassen sich bei bekannten Verfahren der beschriebenen Art, insbesondere bei bekannten Pultrusionsverfahren, nur Kunststoffprofile bilden, die der Kraft bzw. dem Anpressdruck der Abzieheinrichtung standhalten. Daher sind bisher nur Kunststoffprofile herstellbar, die ausreichende Wandungsstärken aufweisen.

Der Erfindung liegt nun die Aufgabe zugrunde, ein Verfahren und eine Vorrichtung zur Herstellung gekrümmter und gerader dünnwandiger Kunststoffprofile bzw. Hohlprofile zu schaffen.

Ein Verfahren zur Lösung dieser Aufgabe weist die Maßnahmen des Anspruchs 1 auf. Demnach ist es vorgesehen, dass mindestens ein Teil einer Form periodisch relativ zum stillstehenden dünnwandigen Kunststoffprofil bewegt wird und das dünnwandige Kunststoffprofil während des Entlangbewegens der Form auf den relativ zu derselben stillstehenden dünnwandigen Kunststoffprofil von mindestens einem einen Kern und ein äußeres Halteteil aufweisenden Haltemittel bzw. Greifer festgehalten wird. Bei dem Kunststoffprofil handelt es sich vorzugsweise um ein Hohlprofil, oder ein Rohrprofil aus Kunststoff beliebigen Querschnitts. Das Haltemittel bzw. der Greifer ist derart ausgebildet, dass es das dünnwandige Rohrprofil vollständig umschließt. Vorzugsweise weist das Haltemittel mindestens zwei äußere Halteteile auf, die das Rohrprofil vollständig, vorzugsweise teilweise, umschließen und lösbar um das Rohrprofil angeordnet sind. Das Zusammenfügen und Auseinanderbewegen der äußeren Halteteile erfolgt automatisch oder manuell und abgestimmt auf den Herstellungsprozess. Der dem Haltemittel zugeordnete Kern befindet sich im Inneren des Kunststoffprofils bzw. des Rohrprofils und korrespondiert in seiner Form mit den inneren Abmessungen des Profils. Der Kern des Haltemittels ist durch einen Haltestab fixiert, insbesondere magnetisch mit den Halteteilen kontaktlos gekoppelt. Erfindungsgemäß ist es außerdem vorgesehen, dass das Kunststoffprofil während der Herstellung, insbesondere während es mit mindestens einem Teil der Form in Kontakt steht und/oder von dem Haltemittel festgehalten wird, aushärtet. Alternativ ist es jedoch auch denkbar, dass das Kunststoffprofil während der Herstellung, insbesondere während es mit mindestens einem Teil der Form in Kontakt steht und/oder von dem Haltemittel festgehalten wird, nicht aushärtet, insbesondere nur teilweise aushärtet. Das Kunststoffprofil wird in einem nicht ausgehärteten bzw. nicht vollständig ausgehärteten Zustand aus der Form gezogen und in einem weiteren Schritt außerhalb der Form und des Haltemittels in eine Endform gebracht, in der es dann vollständig aushärtet (Pulforming). In diesem Fall ist der Herstellungsprozess geteilt in zwei Stufen, nämlich in ein Vorformen durch die Form und ein Endformen durch ein weiteres Formmittel. Bei dem weitern Formtmittel kann es sich beispielsweise um eine Presse handeln. Durch diese Zweiteilung des Herstellungsprozesses lassen sich komplexere, individualisierte Kunststoffprofil herstellen.

Bei einer bevorzugten Ausgestaltung des Verfahrens ist es vorgesehen, dass das Haltemittel der Form auf den dünnwandigen Kunststoffprofil bzw. Rohrprofil in einer Pultrusionsrichtung des dünnwandigen Kunststoffprofils gesehen unmittelbar vorgeordnet oder nachgeordnet wird. Der Abstand zwischen dem Haltemittel und der Form wird durch abwechselndes, vorzugsweise periodisches Bewegen der Form und/oder des Haltemittels verändert. Durch dieses Pilgerschrittverfahren bewegen sich die Form und das Haltemittel abwechselnd bzw. zusammen über das Kunststoffprofil und zwar entgegen der Pultrusionsrichtung, vorzugsweise in Pultrusionsrichtung. In Pultrusionsrichtung gesehen, sind die Form und das Haltemittel einem Materialdepot vorgeordnet. Das Haltemittel ist vorzugsweise vor der Form und vor dem Materialdepot positioniert und die Form hinter dem Haltemittel. Das Kunststoffprofil verlässt die Form an einer Austrittsfläche die einem vorderen Ende der Form in Pultrusionsrichtung zugeordnet ist. An einem der Austrittsfläche gegenüberliegendem Ende der Form befindet sich eine Eintrittsfläche, in die das Material bei der Herstellung des Profils hineingezogen wird. Das Material tritt nach und nach durch die Eintrittsfläche in die Form und das Kunststoffprofil nach und nach aus der Austrittsfläche der Form wieder aus. Das fertige Kunststoffprofil befindet sich in Pultrusionsrichtung gesehen vor dem Haltemittel.

Es ist weiter vorgesehen, dass das mindestens eine Haltemittel in Phasen, in denen mindestens ein Teil der Form stillsteht, außer Kontakt mit dem dünnwandigen Kunststoffprofil gebracht wird, vorzugsweise die äußere Halterung des Haltemittels mit dem dünnwandigen Kunststoffprofils außer Kontakt gebracht wird, und relativ zum stillstehenden Kunststoffprofil in einer entgegen der Pultrusionsrichtung, zur Form hin bewegt wird. Dabei wird der Kern des Haltemittels in gleicher Weise bewegt, wie die äußere Halterung. Die relative Positionierung der äußeren Halterung und des Kerns des Haltemittels verändert sich nicht. Bezüglich des dünnwandigen Kunststoffprofils bewegen sich die äußere Halterung und der Kern des Haltemittels in gleichem Maße.

Es ist erfindungsgemäß vorgesehen, dass das mindestens eine Haltemittel in Phasen, in denen mindestens ein Teil der Form relativ zum dünnwandigen Kunststoffprofil stillsteht, mit dem dünnwandigen Kunststoffprofil in Kontakt gebracht wird. Es ist vorzugsweise vorgesehen, dass die äußere Halterung des Haltemittels mit dem dünnwandigen Kunststoffprofils in Kontakt gebracht wird bzw. der Kontakt wieder aufgehoben wird. Bei der Kontaktaufnahme wird auf eine äußere Wandung des Profils ein Druck aufgebaut. Damit das Profil nicht einknickt oder beschädigt wird, wird durch den im Inneren des Profils liegende Kern des Haltemittelns ein entsprechender Gegendruck aufgebaut, der die Kraft der Halteteile auf die Wandung kompensiert. Die Kraft bzw. der Anpressdruck der Halteteile und der Gegendruck des Kern sind so groß, dass das Profil derart fixiert ist, dass es entlang der Pultrusionsrichtung nicht bewegbar ist.

Nach einer weiteren Ausgestaltung des Verfahrens ist es vorgesehen, dass zum Erreichen einer Ausgangsstellung des Pultrusionsverfahrens mindestens ein Teil der Form und das oder jedes einen Kern aufweisende Haltemittel zusammen mit dem Kunststoffprofil in Pultrusionsrichtung bewegt werden. Diese Ausgangsstellung ist der Ausgang eines neuen Pultrusionszykluses. Bei der gemeinsamen Bewegung der Form, des Haltemittels und des Kunststoffprofils wird Material für den nächsten Pultrusionsschritt von dem Materialdepot abgezogen.

Bevorzugt ist es außerdem vorgesehen, dass das mindestens eine einen Kern aufweisende Haltemittel stillsteht und außer Kontakt mit dem dünnwandigen Kunststoffprofil gebracht wird und im Anschluss ein vorderes Ende der Form zusammen mit dem dünnwandigen Kunststoffprofil in Pultrusionsrichtung in die Nähe des Haltemittels bewegt wird. Das dünnwandige Kunststoffprofil wird dabei über den Kern des Haltemittels geschoben. Bei diesem alternativen Verfahrensschritt bewegt sich das Haltemittel nicht. Die Halteteile und der Kern befinden sich immer an der gleichen Stelle und bewegen sich nicht entlang der Pultrusionsrichtung. Vielmehr wird das Kunststoffprofil bei geöffneten Halteteilen durch das Haltemittel durchgeschoben. Der Abstand der Form bzw. der Austrittsfläche der Form und des Haltemittels variiert periodisch zwischen einer maximalen Hubstellung und einer minimalen Hubstellung. Dieses Verfahren wird für Kunststoffe bevorzugt, bei denen das Material bzw. der Kunststoff haftet und kein ideales Trennmittel vorliegt.

Insbesondere sieht es die Erfindung weiter vor, dass der Kern des Haltemittels in Pultrusionsrichtung durch mindestens einen Teil der Form zugeführt wird und zwar dem Bereich des dünnwandigen Kunststoffprofils, der durch das äußere Halteteil festgehalten wird. Außerdem ist es vorgesehen, dass alternativ der Kern des Haltemittels entgegen der Pultrusionsrichtung den Bereich des dünnwandigen Kunststoffprofils zugeführt wird, der durch das äußere Halteteil festgehalten wird. Wenn der Kern des Haltemittels den äußeren Halteteil entgegen der Pultrusionsrichtung durch das fertige dünnwandige Kunststoffprofil zugeführt wird, muss dieses in regelmäßigen Abschnitten unterbrochen werden. Wenn der Kern des Haltemittels den Bereich des dünnwandigen Kunststoffprofils, der durch das äußere Halteteil festgehalten wird, durch die Form in Pultrusionsrichtung zugeführt wird, muss der innere Teil der Form bzw. der Formkern derart beschaffen sein.

Nach einer weiteren Ausgestaltung der Erfindung ist es vorgesehen, dass durch den Kern im Inneren des dünnwandigen Kunststoffprofils, eine, der durch das äußere Halteteil auf das dünnwandige Kunststoffprofil wirkende Kraft, entgegengesetzte Kraft erzeugt wird. Besonders bei dünnwandigen Profilen ist es wichtig, dass die Kraft, die durch das äußere Halteteil auf das dünnwandige Kunststoffprofil aufgebracht wird, durch einen entsprechende Gegenkraft kompensiert wird. Wird die Kraft des äußeren Halteteils nicht kompensiert, kann dies zu einer Zerstörung des dünnwandigen Rohrprofils kommen. Daher ist es für die Erfindung wesentlich, dass der Kern des Halteteils im Inneren des Hohlprofils mindestens der durch das äußere Halteteil erzeugten Kraft entgegenwirkt und der Kern und die Halteteile sich immer auf gleicher Höhe bezüglich des Profils befinden.

Vorzugsweise ist es erfindungsgemäß vorgesehen, dass durch einen expandierbaren Kern des Haltemittels, eine, der durch das äußere Halteteil erzeugten Kraft, korrespondierende Kraft erzeugt wird. Da der Kern des Haltemittels erfindungsgemäß beliebig expandierbar ist, ist die Gegenkraft zur durch das äußere Halteteil erzeugten Kraft variabel. Die Kraft, die dem äußeren Halteteil entgegenwirkt, kann so flexibel eingestellt werden.

Weiter ist es vorgesehen, dass der expandierbare Kern des Haltemittels durch einen mit dem Kern verbundenen Haltestab mit einem unter Druck stehenden Medium versorgt wird, und zwar der durch die äußeren Halteteil erzeugten Kraft entsprechend. Bei dem unter Druck stehenden Medium kann es sich vorzugsweise um ein Gas wie beispielsweise Luft oder eine Flüssigkeit handeln. Der Druck des Mediums in dem Kern kann beliebig variiert werden, insbesondere kann das Medium komplett aus dem Kern gepumpt werden. Der vorzugsweise aus einem flexiblen Kunststoff bestehende Kern weist in seinem Inneren zusätzlich einen dehnbaren Balg auf, in dem sich das unter Druck stehende Medium befindet.

Eine weitere vorteilhafte Ausgestaltung der vorliegenden Erfindung besteht darin, dass das Kunststoffprofil abwechselnd von verschiedenen, auf dem dünnwandigen Kunststoffprofil hintereinander angeordneten Haltemitteln festgehalten wird, während sich die Form bzw. der Formkern relativ zum stillstehenden dünnwandigen Kunststoffprofil bewegt.

Erfindungsgemäß ist es vorgesehen, dass mehrere, vorzugsweise zwei, Haltemittel vor der Form angeordnet werden. Das dünnwandige Kunststoffprofil wird beim Festhalten von mindestens einem Haltemittel radial profiliert. Mindestens eines der Haltemittel ist derart profiliert, dass es beim Kontaktaufnehmen mit dem dünnwandigen Hohlprofil diese Profilierung bzw. ein Negativ der Profilierung an das Hohlprofil überträgt. Dabei ist es vorgesehen, dass es sich bei der Profilierung sowohl um eine konkave, als auch um eine konvexe Form handeln kann. Im Zusammenspiel des profilierten Halteteils mit dem expandierbaren Kern lässt sich das dünnwandige Hohlprofil lokalisiert, individuell mit einer Profilierung beaufschlagen. Die Form des expandierbaren Kerns wird so angepasst, dass das dünnwandige Kunststoffprofil formschlüssig zwischen der Profilierung des Haltemittels und dem Kern festgesetzt wird. Es ist denkbar, dass eine Vielzahl von verschieden profilierten Halteteilen entlang der Pultrusionsrichtung hintereinander angeordnet sind und dem dünnwandigen Kunststoffprofil eine komplexe Profilierung aufprägen.

Eine Vorrichtung zur Lösung der eingangs genannten Aufgabe weist die Merkmale des Anspruchs 10 auf. Gemäß Anspruch 10 ist es vorgesehen, dass mindestens ein Teil der Form relativ zum Kunststoffprofil auf dem Kunststoffprofil entlang bewegbar ist und in eine Pultrusionsrichtung gesehen vor der Form mindestens ein einen Kern und ein äußeres Halteteil aufweisendes Haltemittel zum Festhalten des aus der Form austretendenden Kunststoffprofils angeordnet ist.

Bevorzugt ist es weiter vorgesehen, dass das jeweilige Haltemittel zur Herstellung einer lösbaren Greifverbindung mit dem dünnwandigen Kunststoffprofil bzw. Hohlprofil außerhalb der Form, insbesondere in Pultrusionsrichtung gesehen vor der Form, ausgebildet ist und vorzugsweise jedes Haltemittel relativ zum dünnwandigen Kunststoffprofil bewegbar ist.

Eine weitere vorteilhafte Ausgestaltung der vorliegenden Erfindung besteht darin, dass der Kern in seiner Dimensionierung mit einem inneren Querschnitt des dünnwandigen Kunststoffprofils korrespondiert. Es ist außerdem denkbar, dass zwischen dem Kern und einer Innenwandung des dünnwandigen Kunststoffprofils ein Spalt, vorzugsweise ein schmaler Spalt, vorgesehen ist.

Weiter ist es insbesondere vorgesehen, dass der Kern des Haltemittels einen Haltestab aufweist, der sich in Pultrusionsrichtung durch mindestens einen Teil der Form erstreckt, oder sich entgegen der Pultrusionsrichtung durch das dünnwandige Kunststoffprofil erstreckt.

Die Erfindung sieht es weiter vor, dass der Kern aus einem flexiblen Material, vorzugsweise einem Kunststoff, besteht, der über eine Zuleitung im Haltestab durch ein Medium, vorzugsweise ein Gas oder eine Flüssigkeit, in seiner Größe variierbar ist. Der Vorrichtung ist eine Pumpe zugeordnet, die je nach Herstellungsphase Gas bzw. eine Flüssigkeit in den Kern hinein pumpt oder heraus pumpt. Im Inneren des Kerns befindet sich ein aus einem flexiblen Material hergestellter Balg, der mit der Zuleitung verbunden ist. In diesen Balg strömt bzw. fließt das Gas bzw. die Flüssigkeit. Der sich ausdehnende Balg drückt gegen das flexible Material des Kerns, wodurch der Gegendruck bzw. die Gegenkraft zu der durch das äußere Halteteil erzeugte Kraft generiert wird.

Weiter ist es erfindungsgemäß vorgesehen, dass der flexible Kern des Haltemittels der Form der Halteteile anpassbar ist und entlang der Pultrusionsrichtung durch den Haltestab derart verfahrbar ist, dass verschiedene Positionen ansteuerbar sind, um die äußeren Halteteile zu unterstützen.

Insbesondere bei einer Vielzahl von hintereinander angeordneten Haltemitteln ist es wesentlich, dass der Kern dem Haltemittel zugeordnet werden kann, welches das dünnwandige Kunststoffprofil festhält.

Insbesondere ist es erfindungsgemäß vorgesehen, dass in Pultrusionsrichtung gesehen vor der Form zwei oder mehrere Haltemittel angeordnet sind, wobei mindestens ein Haltemittel ein profiliertes Halteteil aufweist und die Haltemittel unabhängig voneinander betreibbar sind. Es ist insbesondere vorgesehen, dass die Haltemittel gekoppelt miteinander betreibbar sind.

Nachfolgend werden bevorzugte Ausführungsbeispiele der Erfindung anhand der Zeichnung näher erläutert. In dieser zeigen:
Fig. 1 eine schematische Ansicht eines ersten Ausführungsbeispiels einer erfindungsgemäßen Vorrichtung in einer Ausgangsstellung,
Fig. 2 eine schematische Ansicht eines zweiten Ausführungsbeispiels einer erfindungsgemäßen Vorrichtung in einer Ausgangsstellung,
Fig. 3 die Vorrichtung der Fig. 1 nach einem ersten Arbeitsschritt, der auf die Ausgangsstellung folgt,
Fig. 4 die Vorrichtung der Fig. 1 und 3 nach einem zweiten Arbeitsschritt,
Fig. 5 die Vorrichtung der Fig. 1, 3 und 4 nach einem dritten Arbeitsschritt,
Fig. 6 die Vorrichtung der Fig. 1, 3 bis 5 nach einem letzten Arbeitsschritt,
Fig. 7 ein zweites Verfahrensbeispiel einer erfindungsgemäßen Vorrichtung der Fig. 1 in einer Ausgangsstellung,
Fig. 8 die Vorrichtung der Fig. 1 und 7 nach einem ersten Arbeitsschritt,
Fig. 9 die Vorrichtung der Fig. 1, 7 und 8 nach einem zweiten Arbeitsschritt,
Fig. 10 die Vorrichtung der Fig. 1, 7 bis 9 nach einem dritten Arbeitsschritt,
Fig. 11 die Vorrichtung der Fig. 1, 7 bis 10 nach einem vierten Arbeitsschritt,
Fig. 12 die Fig. 1, 7 bis 11 nach einem letzten Arbeitsschritt,
Fig. 13 eine schematische Ansicht eines weiteren Ausführungsbeispiels einer erfindungsgemäßen Vorrichtung,
Fig. 14 die Vorrichtung der Fig. 13 nach einem weiteren Arbeitsschritt,
Fig. 15 eine schematische Ansicht eines weiteren Ausführungsbeispiels einer erfindungsgemäßen Vorrichtung in einer Ausgangsstellung,
Fig. 16 die Vorrichtung der Fig. 15 nach einem ersten Arbeitsschritt, der auf die Ausgangsstellung folgt,
Fig. 17 die Vorrichtung der Fig. 15 und 16 nach einem zweiten Arbeitsschritt,
Fig. 18 die Vorrichtung der Fig. 15 bis 17 nach einem dritten Arbeitsschritt,
Fig. 19 die Vorrichtung der Fig. 15 bis 18 nach einem vierten Arbeitsschritt, und
Fig. 20 die Vorrichtung der Fig. 15 bis 19 in einem letzten Arbeitsschritt.

Die Figuren zeigen schematisch die erfindungsgemäßen Vorrichtungen, die auch zur Durchführung des erfindungsgemäßen Verfahrens dienen. Bei diesen Vorrichtungen handelt es sich um Pultrusionseinrichtungen zur Herstellung von Kunststoffprofilen 30, insbesondere dünnwandigen Kunststoffprofilen, vorzugsweise rohrartigen Kunststoffprofilen. Bei dem Kunststoff handelt es sich vorzugsweise um ein Duroplast.

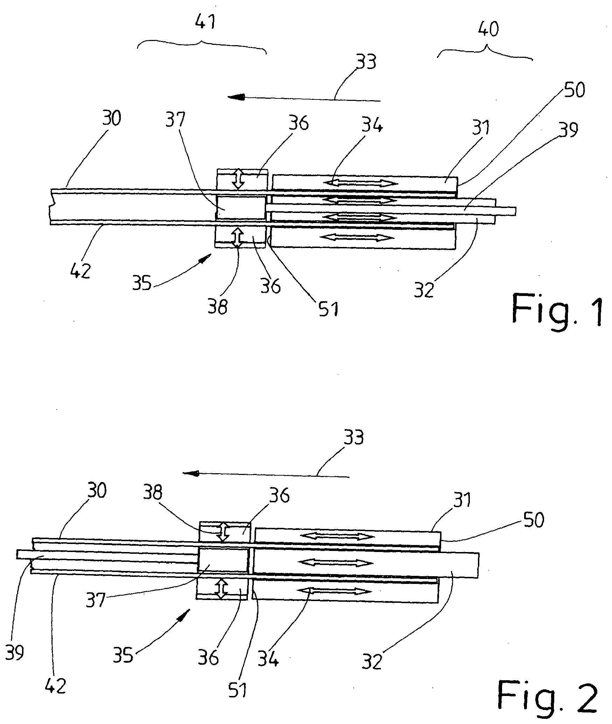

Mit den schematisch gezeigten Vorrichtungen lassen sich rohrförmige Kunststoffprofile 30 herstellen mit beliebigen Wandstärken. Die gezeigte Vorrichtung der Fig. 1 zeigt eine Form 31 mit einem innenliegenden Formkern 32, die durch ihr Zusammenwirken dem Kunststoffprofil 30 seine rohrartige Ausgestaltung verleihen. Die Erfindung ist nicht darauf beschränkt, dass das Kunststoffprofil 30 nur einen Formkern 32 aufweist, vielmehr ist es auch denkbar, dass das Kunststoffprofil 30 einen komplexeren Querschnitt aufweist, der mit einer Vielzahl von Formkernen 32 hergestellt wird. Die Form 31 und der Formkern 32 lassen sich parallel zu einer Pultrusionsrichtung 33 über bzw. durch das Kunststoffprofil 30 verfahren (angedeutet durch Pfeile 34).

In Pultrusionsrichtung 33 gesehen befindet sich vor der Form 31 bzw. vor dem Formkern 32 ein Haltemittel 35 (Fig. 1). Dieses Haltemittel 35 weist ein äußeres Halteteil 36 und einen Kern 37 auf. Das äußere Halteteil 36 besteht vorzugsweise aus zwei Teilen und kann von außen um das Kunststoffprofil 30, das aus der Form 31 austritt, geschlossen werden. Durch Bewegung der äußeren Halteteile 36 quer zur Pultrusionsrichtung 33 (angedeutet durch Pfeile 38) kann das Kunststoffprofil 30 gegriffen werden, oder freigegeben werden. An derselben Position der äußeren Halteteile 36 relativ zum Kunststoffprofil 30 befindet sich im Inneren des Kunststoffprofils 30 der Kern 37 des Haltemittels 35. Der Durchmesser des Kerns 37 ist derart bemessen, dass er gerade dem inneren Querschnitt des Kunststoffprofils 30 entspricht. Es ist aber auch denkbar, dass der äußere Durchmesser des Kerns 37 leicht gegenüber dem Querschnitt des Kunststoffprofils 30 verringert ist. Die Länge des Kerns 37 entspricht der Länge der äußeren Halteteile 36.

Der Kern 37 ist über einen Haltestab 39 in dem Kunststoffprofil 30 parallel zur Pultrusionsrichtung 33 bewegbar. Bei dem in Fig. 1 dargestellten Ausführungsbeispiel der Erfindung erstreckt sich der Haltestab 39 durch den Formkern 32. Dies ist möglich, bei entsprechender Ausgestaltung des Formkerns 32.

Ein nicht dargestelltes Materialdepot für Fasern, beispielsweise Kohlefasern, Gewebe und/oder Gewirken oder Ähnlichem bzw. für Verstärkung befindet sich entgegen der Pultrusionsrichtung 33 hinter der Form 31. Somit werden die Fasern, die Gewebe, die Verstärkung etc. in einem hinteren Bereich 40 in die Form 31 bzw. den Formkern 32 eingezogen und verlassen diese wieder in einem vorderen Bereich 41, wo das geformte Kunststoffprofil von dem Haltemittel 35 ergriffen wird. Und zwar werden die Fasern etc. durch die Eintrittsfläche 50 der Form 31 in die selbige eingezogen und verlassen die Form 31 wieder aus einer Austrittsfläche 51. Die Form 31 kann für ein schnelleres Aushärten des Profils heizbar und/oder kühlbar sein.

Wenn es die Beschaffenheit des Formkerns 32 nicht zulässt, dass der Haltestab 39 sich in Pultrusionsrichtung 33 durch den Formkern 32 erstreckt, wird der Kern 37 vom vorderen Bereich 41 entgegen der Pultrusionsrichtung 33 durch den Haltestab 39 gehalten (Fig. 2). Hier erstreckt sich der Haltestab 39 durch das Innere des fertigen Kunststoffprofils 30.

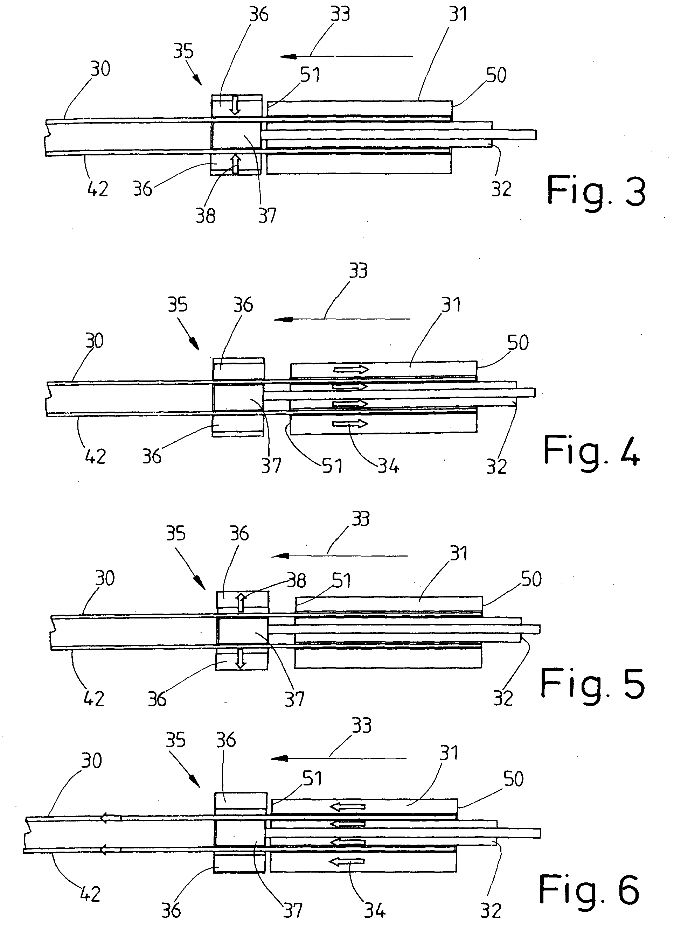

Im Folgenden wird anhand der Fig. 3 bis 6 die Herstellung eines dünnwandigen Kunststoffprofils 30 mit der Vorrichtung gemäß Fig. 1 dargestellt. Diese in den Fig. 3 bis 6 beschriebene Herstellung eines dünnwandigen Kunststoffprofils 30 lässt sich auf die Vorrichtung gemäß Fig. 2 übertragen. In der in Fig. 3 dargestellten Phase der Herstellung eines dünnwandigen Kunststoffprofils 30 werden die äußeren Halteteile 36 derart quer zur Pultrusionsrichtung 33 bewegt (angedeutet durch die Pfeile 38), dass sie mit der äußeren Wandung 42 des Kunststoffprofils 30 Kontakt aufnehmen. Und zwar wird das Kunststoffprofil 30 derart von den äußeren Halteteilen 36 gegriffen, dass das Kunststoffprofil 30 fest zwischen den äußeren Halteteilen 36 und dem Kern 37 des Haltemittels 35 fixiert ist.

Wenn das Kunststoffprofil 30 zwischen dem äußeren Halteteil 36 und dem Kern 37 fixiert ist, bewegt sich die Form 31 und der Formkern 32 entgegen der Pultrusionsrichtung 33 auf dem Kunststoffprofil 30 und ziehen dabei nicht dargestellte Fasern, Gewebe, Verstärkung, Gewirke etc. in die Eintrittsfläche 50 der Form 31 hinein (34) (Fig. 4). Dabei wird die Wandung 42 des rohrartigen Kunststoffprofils 30 gebildet. Je nach Ausgestaltung der Form 31 und des Formkerns 32 lassen sich so verschiedenste hohlwandige bzw. rohrartige Kunststoffprofile herstellen.

Nachdem die Form 31 und der Formkern 32 auf dem Kunststoffprofil 30 eine gewisse Strecke zurück gelegt haben, stoppt die Form 31 bzw. der Formkern 32 (Fig. 5). Im Anschluss gibt das Haltemittel 35 das Kunststoffprofil 30 frei, in dem sich die äußeren Halteteile 36 nach außen (durch die Pfeile 38 angedeutet) bewegen (Fig. 5).

Im letzten Arbeitsschritt wird das Kunststoffprofi 30 zusammen mit der Form 31 und dem Formkern 32 in Pultrusionsrichtung 33 bewegt, so dass die Form 31 bzw. der Formkern 32 wieder in der Nähe des Haltemittels 35 sind. Das Kunststoffprofil 30 zusammen mit der Form 31 und dem Formkern 32 bewegen sich dabei relativ zum Haltemittel 35 parallel zur Pultrusionsrichtung 33 (Fig. 6). Das Kunststoffprofil 30, die Form 31 und der Formkern 32 stehen bei diesem Arbeitsschritt relativ zueinander still. Bei der Bewegung des Kunststoffprofils 30 wird weiteres Material vom Materialdepot abgezogen (nicht dargestellt). Das in den Fig. 3 bis 6 beschriebene Verfahren zur Herstellung eines dünnwandigen Profils eignet sich besonders für haftende Profile.

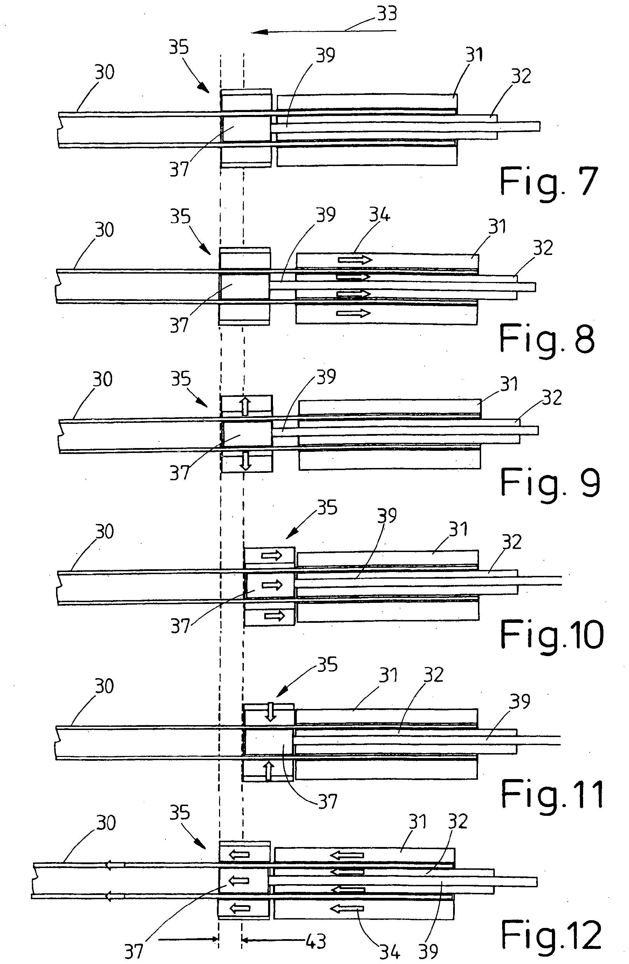

In den Fig. 7 bis 12 ist ein weiteres Ausführungsbeispiel der vorliegenden Erfindung dargestellt. Das in den Fig. 7 bis 12 dargestellte Verfahren wird anhand des Ausführungsbeispiels der Vorrichtung gemäß Fig. 1 beschrieben. Es lässt sich jedoch auch ohne Weiteres auf das Ausführungsbeispiel gemäß Fig. 2 übertragen. Das in den Fig. 7 bis 12 beschriebene Verfahren zur Herstellung eines dünnwandigen Kunststoffprofils eignet sich besonders für ideale Trennmittel, das heißt die Fasern bzw. das Profil haften nicht in der Form.

Die Fig. 7 beschreibt eine Ausgangsstellung gemäß Fig. 1. Das in den Fig. 7 bis 9 dargestellte Verfahren ist mit den Abläufen der Fig. 3 bis 5 identisch. Daher wird auf die obige Beschreibung verwiesen.

Nachdem die Form 31 und der Formkern 32 das Kunststoffprofil 30 geformt haben und sich das Haltemittel 35 geöffnet hat (Fig. 9), bewegen sich das äußere Halteteil 36 und der Kern 37 zusammen entgegen der Pultrusionsrichtung 33 auf die Form 31 bzw. auf den Formkern 32 zu. Die Distanz die die Form 31 bzw. der Formkern 32 über dem Kunststoffprofil 30 zurücklegen, entspricht der Distanz die von der Form 31 bzw. des Formkerns 32 für die Herstellung des Kunststoffprofils 30 zurückgelegt wurde (Fig. 10).

Nachdem sich das Haltemittel 35 entgegen der Pultrusionsrichtung 33 entlang dem Kunststoffprofil 30 bewegt hat, schließt sich das Haltemittel 35 mit seinem äußeren Halteteil 36 wieder um das Kunststoffprofil 30 (Fig. 11). Das Kunststoffprofil 30 wird jetzt von dem äußeren Halteteil 36 und dem Kern 37 fest ergriffen.

Im nächsten und letzten Arbeitsschritt bewegt sich das Halteteil 35, die Form 31, der Formkern 32 und das Kunststoffprofil 30 zusammen in Pultrusionsrichtung 33, und zwar um genau einen Hub 43, den das Haltemittel 35, die Form 31 und der Formkern 32 vorher entgegen der Pultrusionsrichtung 33 durchgeführt haben (Fig. 12); sie befinden sich demnach wieder in ihrer in Fig. 7 dargestellten Ausgangsposition. Bei dieser Bewegung wird das Kunststoffprofil 30 von dem Haltemittel 35 gezogen. Beim letzten Arbeitsschritt (Fig. 12) bewegt sich das Kunststoffprofil 30, das Haltemittel 35, die Form 31 und der Formkern 32 relativ zu dem nicht dargestellten Materialdepot.

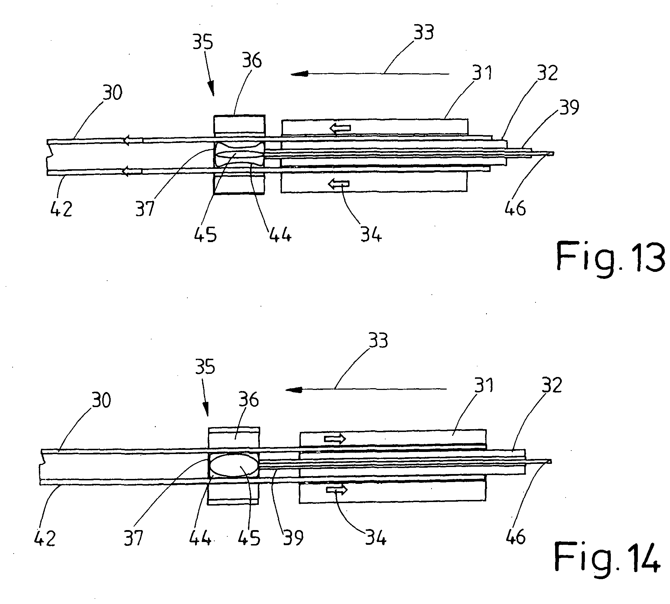

Ein weiteres Ausführungsbeispiel der Erfindung ist in den Fig. 13 und 14 dargestellt. Bei diesem Ausführungsbeispiel ist der Kern 37 des Haltemittels 35 flexibel ausgebildet. Der Kern 37 weist eine flexible äußere Hülle 44 auf, die sich in ihrer Form beliebig verändern kann. Im Inneren der äußeren Hülle 44 befindet sich ein Balg 45. Dieser Balg 45 ist mit einer Leitung 46 verbunden. Diese Leitung erstreckt sich durch den Haltestab 39 und ist mit einer nicht dargestellten Pumpe verbunden. Über diese Leitung 46 ist in den Balg 45 eine Flüssigkeit bzw. ein Gas pumpbar. Wenn in den Balg 45 ein Gas bzw. eine Flüssigkeit gepumpt wird, expandiert der Balg 45 und überträgt seine äußere Form auf die festere, äußere Hülle 44 des Kerns 37. Je nach Beschaffenheit des Querschnitts des Kunststoffprofils 30 lässt sich so die Form des Kerns 37 durch Expansion des Balgs 45 bzw. der äußeren Hülle 44 anpassen. In der Phase der Herstellung des dünnwandigen Kunststoffprofils 30 in der das Haltemittel 35 das Kunststoffprofil 30 fest umschließt (Fig. 3, Fig. 11) drückt somit das äußere Halteteil 36 von außen auf die Wandung 42 des Kunststoffprofils und der expandierte Kern 37 vom Inneren des Kunststoffprofils 30 her (Fig. 14). Der Kern 37 bzw. der die Hülle 44 bzw. der Balg 45 lassen sich auch wieder kontrahieren. Besonders für die Bewegung des Kerns 37 relativ zum Kunststoffprofil 30 ist es vorteilhaft, wenn der Kern 37 kontrahiert ist. Die Kontraktion des Kerns 37 lässt sich ebenfalls über das nicht dargestellte Pumpmittel bewerkstelligen. Dabei wird aus dem Balg 45 das Gas bzw. die Flüssigkeit herausgepumpt. Alle weiteren Arbeitsschritte zur Herstellung des dünnwandigen Kunststoffprofils 30 verlaufen gemäß den Fig. 3 bis 6 bzw. 7 bis 12.

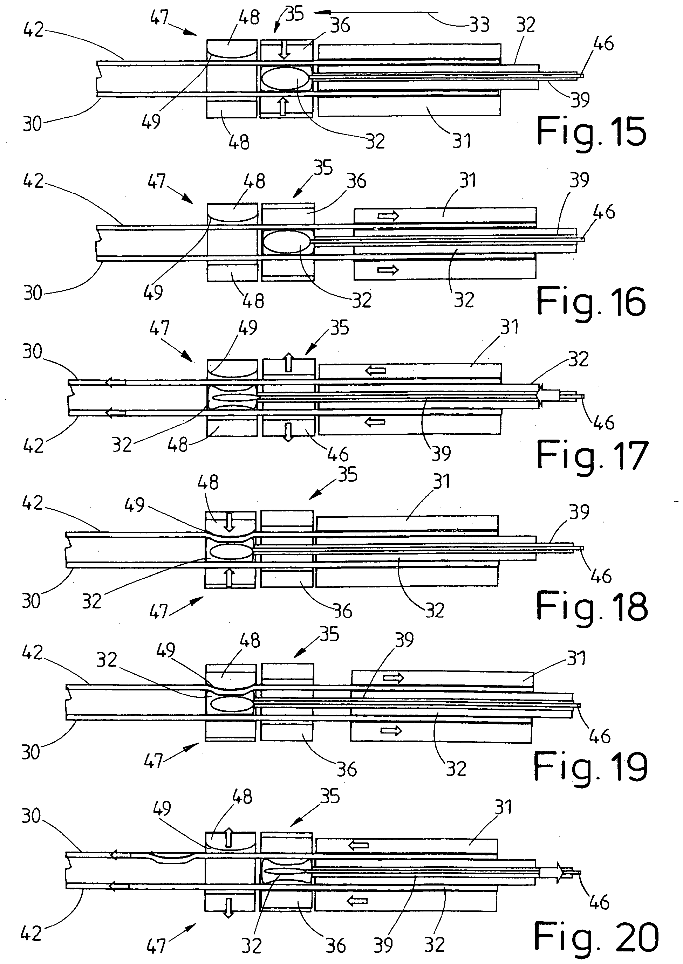

Eine weitere Ausführungsform der vorliegenden Erfindung wird in den Fig. 15 bis 20 dargestellt. Die in der Fig. 15 dargestellte Vorrichtung zur Herstellung eines dünnwandigen Kunststoffprofils 30 weist neben dem zuvor beschriebenen Haltemittel 35 ein weiteres, zweites Haltemittel 47 auf. Dem Haltemittel 35 und dem zweiten Haltemittel 47 ist ein einzelner gemeinsamer Kern 37 zugeordnet. Der den Haltemitteln 35 und 47 gemeinsame Kern ist gemäß dem in den Fig. 13 und 14 beschriebene Kern ausgebildet und zwar als expandierender bzw. kontrahierender flexibler Kern. Es ist erfindungsgemäß vorgesehen, dass mindestens ein äußeres Halteteil 48 des zweiten Haltemittels 47 kunststoffprofilseitig eine konkave bzw. konvexe bzw. beliebige Form aufweist. Das heißt, dass die Form des äußeren Halteteils 48 des zweiten Haltemittels 47 nicht der Form der äußeren Wandung 42 des Kunststoffprofils 30 entspricht. Bei dem in Fig. 15 dargestellten Ausführungsbeispiel weist das äußere Halteteil 48 des zweiten Haltemittels 47 eine konvexe Profilierung 49 auf.

Das in den Fig. 15 und 16 dargestellte Verfahren zur Herstellung eines dünnwandigen Profils entspricht dem Verfahren der Fig. 3 bis 6 mit dem Ausführungsbeispiel der Fig. 13 und 14. Beim Bewegen der Form 31 und des Formkerns 32 sowie des Kunststoffprofils 30 in Pultrusionsrichtung 33 und bei geöffnetem Haltemittel 35 wird der Kern 37 von dem Haltestab 39 entlang Pultrusionsrichtung 33 verfahren. Und zwar wird der Kern 37 in einem kontrahierten Zustand derart entlang der Pultrusionsrichtung 33 verfahren, dass er in seiner Position mit dem zweiten Haltemittel 47 übereinstimmt (Fig. 17).

Für den folgenden Pultrusionsschritt bewegen sich das zweite Haltemittel 47 und der Kern 37 in eine Ausgangsstellung (Fig. 18). Hierbei wird das Kunststoffprofil 30 durch das zweite Haltemittel 47 ergriffen. Durch die Profilierung 49 des äußeren Halteteils 48 wird das Kunststoffprofil 30 lokal verformt. Damit das Kunststoffprofil 30 auch bei dieser lokalen Verformung durch das zweite Haltemittel 47 festgehalten werden kann, wird der flexible Kern 37 derart aufgeblasen, dass er der durch das zweite Haltemittel 47 verursachten Profilierung des Kunststoffprofils 30 entspricht. So kann das Kunststoffprofil 30 auch mit dieser lokalen Verformung durch das zweite Haltemittel 47 fixiert werden und vor einer ungewollten Bewegung entgegen Pultrusionsrichtung 33 geschützt werden (Fig. 19).

Nachdem die Form 31 bzw. der Formkern 32 einen neuen Abschnitt des Kunststoffprofils 33 gefertigt haben, öffnet sich das zweite Haltemittel 47 wieder und der kontrahierte Kern 37 wird entgegen Pultrusionsrichtung 33 dem Haltemittel 35 zugeführt (Fig. 20).

Für die Herstellung des Kunststoffprofils 30 ist es für alle Ausführungsformen vorgesehen, dass das Profil 30 in der Form 31 und/oder in dem Haltemittel 35 aushärtet. Ein Aushärten in der Form 31 ist in sofern vorteilhaft, da das Kunststoffprofil 30 nicht mehr durch das Haltemittel 35 verformt werden kann. Es ist jedoch auch für alle Ausführungsformen vorgesehen, dass das Kunststoffprofil 30 außerhalb der Form 31 bzw. des Haltemittels 35 aushärtet. Somit findet in der Form 31 kein Aushärten bzw. nur ein teilweises Aushärten statt. Dadurch, dass das Kunststoffprofils 30 noch nicht vollständig ausgehärtet ist, kann es durch ein weiteres nicht dargestelltes Formmittel, wie beispielsweise eine Presse, in eine Endform gebracht werden (Pulforming). In diesem Zustand der Endform härtet das Kunststoffprofils 30 dann vollständig aus.

Das Verfahren zur Herstellung eines dünnwandigen Kunststoffprofils ist nicht auf die Ausführungsform der Fig. 15 bis 20 festgelegt. Vielmehr ist es erfindungsgemäß vorgesehen, dass dem Kunststoffprofil 30 eine Vielzahl von äußeren Haltemitteln zugewiesen ist, wobei jedes Haltemittel eine individuelle Profilierung aufweisen kann. Auch die Reihenfolge der zu verwendenden Haltemittel kann durch den beliebig expandierbaren bzw. kontrahierbaren Kern variiert werden.

### Bezugszeichenliste

- 30: Kunststoffprofil
- 31: Form
- 32: Formkern
- 33: Pultrusionsrichtung
- 34: Pfeil
- 35: Haltemittel
- 36: äußeres Halteteil
- 37: Kern
- 38: Pfeil
- 39: Haltestab
- 40: hinterer Bereich
- 41: vorderer Bereich
- 42: Wandung
- 43: Hub
- 44: Hülle
- 45: Balg
- 46: Leitung
- 47: zweites Haltemittel
- 48: äußeres Halteteil
- 49: Profilierung
- 50: Eintrittsfläche
- 51: Austrittsfläche

## Patentansprüche

1. Verfahren zur Herstellung eines dünnwandigen Kunststoffprofils (30), bei dem eine durchgehende Verstärkung aus Strängen, Gewebe und/oder dergleichen durch eine mindestens einen Formkern (32) aufweisenden Form (31) geführt und in der Form (31) im Kunststoff eingebettet wird, **dadurch gekennzeichnet, dass** mindestens ein Teil der Form (31) periodisch relativ zum stillstehenden dünnwandigen Kunststoffprofil (30) bewegt wird und das dünnwandige Kunststoffprofil (30) während des Entlangbewegens der Form (31) von mindestens einem einen Kern (37) und ein äußeres Halteteil (36) aufweisenden Haltemittel (35) festgehalten wird.

2. Verfahren nach Anspruch 1, **dadurch gekennzeichnet, dass** das Haltemittel (35) der Form (31) auf dem dünnwandigen Kunststoffprofil (30) in eine Pultrusionsrichtung (33) des dünnwandigen Kunststoffprofils (30) gesehen unmittelbar vorgeordnet oder nachgeordnet wird, wobei der Abstand zwischen dem Haltemittel (35) und der Form (31) durch abwechselndes, vorzugsweise periodisches Bewegen der Form (31) und/oder des Haltemittels (35) verändert wird.

3. Verfahren nach Anspruch 1 oder 2, **dadurch gekennzeichnet, dass** das mindestens eine Haltemittel (35) in Phasen, in denen mindestens ein Teil der Form (31) relativ zum Kunststoffprofil (30) stillsteht, außer Kontakt mit dem dünnwandigen Kunststoffprofil (30) gebracht wird, vorzugsweise die äußeren Halteteile 36 des Haltemittels (35) mit dem dünnwandigen Kunststoffprofil (30) außer Kontakt gebracht wird, und relativ zum stillstehenden Kunststoffprofil (30) in eine einer Pultrusionsrichtung (33) entgegengesetzten Richtung, zur Form (31) bewegt wird.

4. Verfahren nach einem der vorhergehenden Ansprüche, **dadurch gekennzeichnet, dass** das mindestens eine Haltemittel (35) in Phasen, in denen mindestens ein Teil der Form (31) relativ zum dünnwandigen Kunststoffprofil (30) stillsteht, mit dem dünnwandigen Kunststoffprofil (30) in Kontakt gebracht wird, vorzugsweise die äußere Halterung des Haltemittels (35) mit dem dünnwandigen Kunststoffprofil (30) in Kontakt gebracht wird.

5. Verfahren nach einem der vorhergehenden Ansprüche, **dadurch gekennzeichnet, dass** zum Erreichen einer Ausgangsstellung mindestens ein Teil der Form (31) und das jedes Haltemittel (35) zusammen mit dem Kunststoffprofil (30) in Pultrusionsrichtung (33) bewegt werden.

6. Verfahren nach einem der vorhergehenden Ansprüche, **dadurch gekennzeichnet, dass** das mindestens eine einen Kern (31) aufweisende Haltemittel (35) stillsteht und außer Kontakt mit dem dünnwandigen Kunststoffprofil (30) gebracht wird und im Anschluss eine Austrittsfläche (51) der Form (31) zusammen mit dem dünnwandigen Kunststoffprofil (30) in Pultrusionsrichtung (33) in die Nähe des Haltemittel (35) bewegt wird.

7. Verfahren nach einem der vorhergehenden Ansprüche, **dadurch gekennzeichnet, dass** der Kern (37) des Haltemittels (35) in Pultrusionsrichtung (33) durch mindestens einen Teil der Form (31) dem Bereich des dünnwandigen Kunststoffprofils (30), der durch das äußere Halteteil (36) festgehalten wird, zugeführt wird, vorzugsweise entgegen der Pultrusionsrichtung (33) dem Bereich des dünnwandigen Kunststoffprofils (30), der durch das äußere Halteteil (36) festgehalten wird, zugeführt wird.

8. Verfahren nach einem der vorhergehenden Ansprüche, **dadurch gekennzeichnet, dass** durch den Kern (31), vorzugsweise festen Kern (31), im Inneren des dünnwandigen Kunststoffprofils (30), eine, der durch das äußere Halteteil (36) auf eine Wandung (42) des dünnwandigen Kunststoffprofils (30) wirkende Kraft, entgegengesetzte Kraft erzeugt wird, insbesondere dass durch einen expandierbaren Kern (37) des Haltemittels (35) eine zu der durch das äußere Halteteil (36) erzeugten Kraft korrespondierende Kraft erzeugt wird, vorzugsweise variabel erzeugt wird.

9. Verfahren nach einem der vorhergehenden Ansprüche, **dadurch gekennzeichnet, dass** der expandierbare Kern (37) des Haltemittels (35) durch einen mit dem Kern (37) verbundenen Haltestab (39) mit einem unter Druck stehenden Medium, vorzugsweise ein Gas oder eine Flüssigkeit, versorgt wird und zwar der durch das äußere Halteteil (36) erzeugten Kraft entsprechend, insbesondere das sich periodisch in und entgegen der Pultrusionsrichtung (33) bewegende dünnwandigen Kunststoffprofil (30) nacheinander von verschiedenen, auf dem dünnwandigen Kunststoffprofil (30) hintereinander angeordneten Haltemitteln (35) festgehalten wird und die Wandung (42) des dünnwandigen Kunststoffprofils (30) von mindestens einem Haltemittel (35), radial profiliert wird.

10. Vorrichtung zur Herstellung eines dünnwandigen Kunststoffprofils (30) mit einer mindestens einen Formkern (32) aufweisenden Form (31) in der eine durchgehenden Verstärkung des Kunststoffprofils (30) in flüssigem Kunststoff eingebettet ist, **dadurch gekennzeichnet, dass** mindestens ein Teil der Form (31) relativ zum Kunststoffprofil (30) auf demselben entlangbewegbar ist und in eine Pultrusionsrichtung (33) gesehen vor der Form (31) mindestens ein einen Kern (37) und ein äußeres Halteteil (36) aufweisendes Haltemittel (35) für das aus der Form (31) austretende Kunststoffprofil (30) angeordnet ist.

11. Vorrichtung nach Anspruch 10, **dadurch gekennzeichnet, dass** das jeweilige Haltemittel (35) zur Herstellung einer lösbaren Greifverbindung mit dem dünnwandigen Kunststoffprofil (30) außerhalb der Form (31), insbesondere vor der Form (31), ausgebildet ist und vorzugsweise jedes Haltemittel (35) relativ zum dünnwandigen Kunststoffprofil (30) entlang der Pultrusionsrichtung (33) bewegbar ist.

12. Vorrichtung nach Anspruch 10 oder 11, **dadurch gekennzeichnet, dass** der Kern (37) in seiner Dimensionierung mit einem inneren Querschnitt des dünnwandigen Kunststoffprofils (30) korrespondiert, insbesondere zwischen dem Kern (37) und einer Innenwandung des dünnwandigen Kunststoffprofils (30) ein schmaler Spalt angeordnet ist.

13. Vorrichtung nach einem der Ansprüche 10 oder 12, **dadurch gekennzeichnet, dass** der Kern (37) des Haltemittels (35) einen Haltestab (39) aufweist, der sich in Pultrusionsrichtung (33) durch mindestens einen Teil der Form (31) erstreckt, oder sich entgegen der Pultrusionsrichtung (33) durch das dünnwandigen Kunststoffprofil (30) erstreckt.

14. Vorrichtung nach einem der Ansprüche 10 bis 13, **dadurch gekennzeichnet, dass** der Kern (37) aus einem flexiblem Material, vorzugsweise einem Kunststoff, besteht, der über eine Zuleitung (46) im Haltestab (39) durch ein Medium, vorzugsweise ein Gas oder eine Flüssigkeit, in seiner Größe variierbar ist, insbesondere dass der flexible Kern (37) des Haltemittels (35) den profilierten Halteteilen (36) anpassbar ist und entlang der Pultrusionsrichtung (33) durch den Haltestab (39) derart verfahrbar ist, dass er verschiedene äußere Halteteile (36) unterstützen kann.

15. Vorrichtung nach einem der Ansprüche 10 bis 14, **dadurch gekennzeichnet, dass** in Pultrusionsrichtung (33) gesehen vor der Form (31) zwei oder mehrere Haltemittel (35) angeordnet sind, wobei mindestens ein Haltemittel (35) ein profiliertes Halteteil (36) aufweist und die Haltemittel (35) unabhängig voneinander betreibbar sind.

## Claims

1. A method for producing a thin-walled plastic profile (30) where a continuous reinforcement produced from strands, woven fabric and/or the like is guided through a mould (31) comprising at least one mould core (32) and is embedded in the plastics material in the mould (31), **characterized in that** at least part of the mould (31) is moved periodically relative to the stationary thin-walled plastic profile (30) and the thin-walled plastic profile (30) is held by at least one holding means (35), which comprises a core (37) and an outer holding part (36), whilst the mould (31) is moved along.

2. The method as claimed in claim 1, **characterized in that** the holding means (35) is arranged directly in front of or behind the mould (31) along the thin-walled plastic profile (30) when viewed in a pultrusion direction (33) of the thin-walled plastic profile (30), wherein the spacing between the holding means (35) and the mould (31) is modified by moving the mould (31) and/or the holding means (35) in an alternating, preferably periodic manner,

3. The method as claimed in claim 1 or 2, **characterized in that** the at least one holding means (35) is moved out of contact with the thin-walled plastic profile (30) in phases in which at least part of the mould (31) is stationary relative to the plastic profile (30), preferably the outer holding parts (36) of the holding means (35) are moved out of contact with the thin-walled plastic profile (30), and is moved to the mould (31) relative to the stationary plastic profile (30) in a direction in opposition to a pultrusion direction (33).

4. The method as claimed in one of the preceding claims, **characterized in that** the at least one holding means (35) is moved into contact with the thin-walled plastic profile (30) in phases in which at least part of the mould (31) is stationary relative to the thin-walled plastic profile (30), preferably the outer holder of the holding means (35) is moved into contact with the thin-walled plastic profile (30).

5. The method as claimed in one of the preceding claims, **characterized in that** to achieve a starting position, at least part of the mould (31) and each of the holding means (35) are moved together with the plastic profile (30) in the pultrusion direction (33).

6. The method as claimed in one of the preceding claims, **characterized in that** the at least one holding means (35), which comprises a core (31), is stationary and is moved out of contact with the thin-walled plastic profile (30) and an outlet area (51) of the mould (31) is moved together with the thin-walled plastic profile (30) in the pultrusion direction (33) into the vicinity of the holding means (35).

7. The method as claimed in one of the preceding claims, **characterized in that** the core (37) of the holding means (35) is fed in the pultrusion direction (33) through at least part of the mould (31) to the region of the thin-walled plastic profile (30), which is held by the outer holding part (36), preferably is fed to the region of the thin-walled plastic profile (30), which is held by the outer holding part (36), in a direction in opposition to the pultrusion direction (33).

8. The method as claimed in one of the preceding claims, **characterized in that** a force which opposes the force which acts onto a wall (42) of the thin-walled plastic profile (30) through the outer holding part (36) is generated by the core (31), preferably fixed core (31), in the interior of the thin-walled plastic profile (30), in particular **in that** a force corresponding to the force generated by the outer holding part (36) is generated preferably in variable manner by an expandable core (37) of the holding means (35).

9. The method as claimed in one of the preceding claims, **characterized in that** the expandable core (37) of the holding means (35) is supplied by means of a holding bar (39), which is connected to the core (37), with a pressurized medium, preferably a gas or a liquid, corresponding to the force generated by the outer holding part (36), in particular the thin-walled plastic profile (30), which is moved periodically in and in opposition to the pultrusion direction (33), is held by different holding means (35) one after another which are arranged one behind another along the thin-walled plastic profile (30) and the wall (42) of the thin-walled plastic profile (30) is profiled in a radial manner by at least one holding means (35).

10. A device for producing a thin-walled plastic profile (30) having a mould (31), which comprises at least one mould core (32), in which a continuous reinforcement of the plastic profile (30) is embedded in liquid plastics material, **characterized in that** at least part of the mould (31) is movable relative to the plastic profile (30) along the same and, when viewed in a pultrusion direction (33), at least one holding means (35), which comprises a core (37) and an outer holding part (36), for the plastic profile (30) emerging from the mould (31) is arranged in front of the mould (31).

11. The device as claimed in claim 10, **characterized in that** the respective holding means (35) is realized for producing a releasable grip-type connection to the thin-walled plastic profile (30) outside the mould (31), in particular in front of the mould (31), and preferably each holding means (35) is movable relative to the thin-walled plastic profile (30) along the pultrusion direction (33).

12. The device as claimed in claim 10 or 11, **characterized in that** the core (37) corresponds in its dimensioning to an inner cross section of the thin-walled plastic profile (30), a narrow gap is arranged in particular between the core (37) and an inner wall of the thin-walled plastic profile (30).

13. The device as claimed in either of claims 10 or 12, **characterized in that** the core (37) of the holding means (35) comprises a holding bar (39) which extends through at least part of the mould (31) in the pultrusion direction (33), or extends through the thin-walled plastic profile (30) in a direction in opposition to the pultrusion direction (33).

14. The device as claimed in one of claims 10 to 13, **characterized in that** the core (37) consists of a flexible material, preferably a plastics material, which is variable in size as a result of a medium, preferably a gas or a liquid, via a feed line (46) in the holding bar (39), in particular **in that** the flexible core (37) of the holding means (35) is adaptable to the profiled holding parts (36) and is movable along the pultrusion direction (33) through the holding bar (39) in such a manner that it is able to support different outer holding parts (36).

15. The device as claimed in one of claims 10 to 14, **characterized in that,** when viewed in the pultrusion direction (33), two or more holding means (35) are arranged in front of the mould (31), wherein at least one holding means (35) comprises a profiled holding part (36) and the holding means (35) are operable independently of one another.

## Revendications

1. Procédé de fabrication d'un profilé en plastique à parois minces (30), dans lequel un renforcement continu constitué de tronçons, de tissu et/ou similaires est guidé à travers un moule (31) présentant au moins un noyau de moule (32) et est noyé dans le moule (31) dans le plastique, **caractérisé en ce qu'**au moins une partie du moule (31) est déplacée périodiquement par rapport au profilé en plastique à parois minces immobile (30) et le profilé en plastique à parois minces (30), pendant le déplacement du moule (31), est fixé par au moins un moyen de fixation (35) présentant un noyau (37) et une partie de fixation extérieure (36) .

2. Procédé selon la revendication 1, **caractérisé en ce que** le moyen de fixation (35) du moule (31) est placé directement avant ou après sur le profilé en plastique à parois minces (30), vu dans une direction de pultrusion (33) du profilé en plastique à parois minces (30), la distance entre le moyen de fixation (35) et le moule (31) étant modifiée par un déplacement alternatif, de préférence périodique, du moule (31) et/ou du moyen de fixation (35).

3. Procédé selon la revendication 1 ou 2, **caractérisé en ce que** l'au moins un moyen de fixation (35), dans les phases dans lesquelles au moins une partie du moule (31) est immobile par rapport au profilé en plastique (30), est amené hors contact du profilé en plastique à parois minces (30), de préférence les parties de fixation extérieures (36) du moyen de fixation (35) sont amenées hors contact du profilé en plastique à parois minces (30), et est déplacé vers le moule (31) par rapport au profilé en plastique immobile (30) dans une direction opposée à une direction de pultrusion (33).

4. Procédé selon l'une quelconque des revendications précédentes, **caractérisé en ce que** l'au moins un moyen de fixation (35), dans les phases dans lesquelles au moins une partie du moule (31) est immobile par rapport au profilé en plastique à parois minces (30), est amené en contact avec le profilé en plastique à parois minces (30), de préférence la fixation extérieure du moyen de fixation (35) est amenée en contact avec le profilé en plastique à parois minces (30).

5. Procédé selon l'une quelconque des revendications précédentes, **caractérisé en ce que** pour atteindre une position de départ, au moins une partie du moule (31) et chaque moyen de fixation (35) sont déplacés conjointement avec le profilé en plastique (30) dans la direction de pultrusion (33) .

6. Procédé selon l'une quelconque des revendications précédentes, **caractérisé en ce qu'**au moins un moyen de fixation (35) présentant un noyau (31) est immobile et est amené hors contact du profilé en plastique à parois minces (30) et ensuite une surface de sortie (51) du moule (31) est déplacée conjointement avec le profilé en plastique à parois minces (30) dans une direction de pultrusion (33) à proximité du moyen de fixation (35) .

7. Procédé selon l'une quelconque des revendications précédentes, **caractérisé en ce que** le noyau (37) du moyen de fixation (35) est acheminé dans une direction de pultrusion (33) par au moins une partie du moule (31) à la région du profilé en plastique à parois minces (30) qui est fixée par la partie de fixation extérieure (36), de préférence est acheminé à l'encontre de la direction de pultrusion (33) à la région du profilé en plastique à parois minces (30) qui est fixée par la partie de fixation extérieure (36).

8. Procédé selon l'une quelconque des revendications précédentes, **caractérisé en ce que** le noyau (31), de préférence un noyau solide (31), produit à l'intérieur du profilé en plastique à parois minces (30) une force opposée à la force agissant par la pièce de fixation extérieure (36) sur une paroi (42) du profilé en plastique à parois minces (30), en particulier **en ce qu'**un noyau expansible (37) du moyen de fixation (35) produit, de préférence produit de manière variable, une force correspondant à la force produite par la partie de fixation extérieure (36).

9. Procédé selon l'une quelconque des revendications précédentes, **caractérisé en ce que** le noyau expansible (37) du moyen de fixation (35) est alimenté avec une barre de fixation (39) connectée au noyau (37) par un milieu sous pression, de préférence un gaz ou un liquide, et ce de manière correspondant à la force produite par la pièce de fixation extérieure (36), en particulier le profilé en plastique à parois minces (30) se déplaçant périodiquement dans la direction de pultrusion (33) et dans la direction inverse est fixé successivement par différents moyens de fixation (35) disposés les uns derrière les autres sur le profilé en plastique à parois minces (30), et la paroi (42) du profilé en plastique à parois minces (30) est profilée radialement par au moins un moyen de fixation (35).

10. Dispositif de fabrication d'un profilé en plastique à parois minces (30) avec un moule (31) présentant au moins un noyau de moule (32), dans lequel un renforcement continu du profilé en plastique (30) est noyé dans du plastique liquide, **caractérisé en ce qu'**au moins une partie du moule (31) peut être déplacée par rapport au profilé en plastique (30) le long de celui-ci et, vu dans une direction de pultrusion (33), au moins un moyen de fixation (35) présentant un noyau (37) et une pièce de fixation extérieure (36) pour le profilé en plastique (30) sortant du moule (31) est disposé avant le moule (31).

11. Dispositif selon la revendication 10, **caractérisé en ce que** le moyen de fixation respectif (35) pour la fabrication d'une connexion par engagement détachable avec le profilé en plastique à parois minces (30) est disposé à l'extérieur du moule (31), en particulier avant le moule (31), et de préférence chaque moyen de fixation (35) peut être déplacé par rapport au profilé en plastique à parois minces (30) le long de la direction de pultrusion (33).

12. Dispositif selon la revendication 10 ou 11, **caractérisé en ce que** le noyau (37) correspond de par ses dimensions à une section transversale intérieure du profilé en plastique à parois minces (30), en particulier une mince fente est disposée entre le noyau (37) et une paroi intérieure du profilé en plastique à parois minces (30).

13. Dispositif selon l'une quelconque des revendications 10 ou 12, **caractérisé en ce que** le noyau (37) du moyen de fixation (35) présente une barre de fixation (39) qui s'étend dans la direction de pultrusion (33) à travers au moins une partie du moule (31), ou qui s'étend dans la direction opposée à la direction de pultrusion (33) à travers le profilé en plastique à parois minces (30).

14. Dispositif selon l'une quelconque des revendications 10 à 13, **caractérisé en ce que** le noyau (37) se compose d'un matériau flexible, de préférence d'un plastique, dont la taille peut être modifiée par le biais d'une conduite d'alimentation (46) dans la barre de fixation (39) par un milieu, de préférence un gaz ou un liquide, en particulier **en ce que** le noyau (37) flexible du moyen de fixation (35) peut être adapté aux pièces de retenue profilées (36) et peut être déplacé le long de la direction de pultrusion (33) par la barre de fixation (39) de telle sorte qu'il puisse supporter différentes pièces de fixation extérieures (36).

15. Dispositif selon l'une quelconque des revendications 10 à 14, **caractérisé en ce que** vu dans la direction de pultrusion (33), deux ou plusieurs moyens de fixation (35) sont disposés avant le moule (31), au moins un moyen de fixation (35) présentant une pièce de fixation profilée (36) et les moyens de fixation (35) pouvant être actionnés indépendamment les uns des autres.
